# FASCICULE DE BREVET EUROPEEN

(11) **EP 1 875 576 B1**
(45) Date de publication et mention de la délivrance du brevet: **24.10.2012**
(21) Numéro de dépôt: 06743687.3
(22) Date de dépôt: 13.04.2006
(51) Int. Cl.: H02G 11/02, B65H 75/14

(54) **BOITIER D'APPAREIL ELECTROMENAGER DE PREPARATION CULINAIRE MUNI D'UN LOGEMENT POUR LE RANGEMENT DU CORDON**
GEHÄUSE FÜR EIN HAUSHALTSGERÄT ZUR NAHRUNGSZUBEREITUNG MIT VERTIEFUNG ZUR KABELAUFNAHME
HOUSING PERTAINING TO A HOUSEHOLD APPLIANCE FOR CULINARY PURPOSES, PROVIDED WITH A RECESS FOR RECEIVING THE CORD

(30) Priorité: 29.04.2005 FR 0504356
(43) Date de publication de la demande: 09.01.2008
(73) Titulaire: SEB SA, 69130 Ecully (FR)
(72) Inventeur: LECERF, Joël, F-50190 Périers (FR)
(74) Mandataire: Kiehl, Hubert
(86) Numéro de dépôt international: PCT/FR2006/000812
(87) Numéro de publication internationale: WO 2006/117445

(56) Documents cités:
- DE-A1- 3 020 666
- DE-C1- 19 727 328
- FR-A- 2 333 369
- US-A- 2 545 145

## Description

La présente invention concerne le domaine technique général des appareils électroménagers de préparation culinaire comportant un organe électrique, tel un moteur ou une résistance chauffante, alimenté par un cordon. La présente invention concerne plus particulièrement un boîtier comprenant un logement pour le rangement du cordon d'alimentation électrique de l'appareil.

Il est connu, du document DE 30 20 666; un appareil mixeur comportant un corps cylindrique présentant une extrémité intégrant un logement pour le stockage du cordon d'alimentation électrique. Un tel logement comporte un noyau d'enroulement mobile en translation entre une position d'enroulement, dans laquelle le noyau d'enroulement est sorti du logement pour permettre l'enroulement du cordon sur le noyau, et une position de fermeture dans laquelle le noyau et le cordon sont masqués dans le logement. Un tel dispositif d'enroulement présente cependant l'inconvénient d'être relativement complexe et fragile. Il nécessite également de la part de l'utilisateur un enroulement soigné du cordon pour que le noyau puisse coulisser sans difficulté à l'intérieur du logement.

Il est également connu, du document FR 2 333 369, un appareil électroménager présentant un logement comportant en son centre un noyau pour l'enroulement d'un cordon, le logement étant délimité sur sa périphérie par une lèvre souple venant dans le prolongement du corps de l'appareil. Cependant, sur cet appareil, la lèvre souple présente l'inconvénient de posséder une extrémité effilée de sorte que, lors de l'enroulement du cordon, la lèvre a tendance à rester courbée vers l'intérieur du logement si le matériau utilisé possède une faible rigidité, avec de forts risques d'être coincée par le cordon enroulé. A l'inverse, si la lèvre est réalisée dans un matériau plus rigide, il devient alors difficile d'introduire ou de sortir le cordon de son logement.

L'invention qui suit vise à pallier ces inconvénients en proposant un boîtier d'appareil électroménager muni d'un logement pour le rangement d'un cordon permettant un enroulement aisé du cordon et qui soit simple et économique à réaliser.

Le but de l'invention est atteint par un boîtier d'appareil électroménager de préparation culinaire, tel un pied de mixage, le boîtier comportant un corps renfermant un organe électrique alimenté par un cordon électrique, le corps du boîtier comportant un logement pour le rangement du cordon comprenant un noyau autour duquel le cordon peut être enroulé, caractérisé en ce que le logement comprend une jupe en matériau souple élastique, disposée dans le prolongement du corps du boîtier et venant masquer au moins partiellement le noyau, la jupe présentant une forme adaptée permettant son retournement dans une position stable libérant l'accès au logement. '

Une telle caractéristique présente l'avantage de permettre, si nécessaire, un accès visuel au logement, ce qui permet d'identifier rapidement tout éventuel problème de coincement du cordon à l'intérieur du logement. Une telle caractéristique permet également de faciliter l'accès au logement lorsque la jupe est retournée, tout en permettant la dissimulation du cordon dans le logement lorsque la jupe est ramenée dans sa position initiale.

Selon une autre caractéristique de l'invention, la jupe souple est portée par une extrémité du noyau d'enroulement et présente une forme sensiblement hémisphérique.

Selon encore une autre caractéristique de l'invention, la jupe comprend un bord venant à proximité du corps du boîtier qui présente une surépaisseur formant un bourrelet.

Une telle caractéristique présente l'avantage de renforcer la rigidité de la bordure de la jupe et les forces de rappel la ramenant dans sa position initiale après déformation.

Selon d'autres modes particuliers de réalisation, le boîtier d'appareil électroménager selon l'invention peut comprendre l'une ou plusieurs des combinaisons prises isolément ou selon toutes les combinaisons techniquement possibles:
- le noyau est réalisé dans un matériau plastique rigide, la jupe souple étant rapportée sur le noyau,
- la jupe est en silicone ou en matériau thermoplastique élastomère,
- le noyau comporte une extrémité munie d'un disque venant soutenir la jupe dans sa partie centrale,
- le corps du boîtier comporte une paroi cylindrique venant à proximité de la jupe, la paroi présentant une échancrure pour le passage du cordon.
- le logement est formé partiellement par une cavité disposée à l'extrémité du corps du boîtier,
- le corps du boîtier est formé par deux coquilles assemblées l'une sur l'autre, la cavité du logement du cordon étant délimitée latéralement par une paroi portée par une seule des deux coquilles du corps.
- la cavité comporte une zone de marquage qui est masquée par la jupe souple et qui peut être rendue visible en retournant la jupe.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un boîtier d'appareil électroménager muni d'un logement pour le rangement d'un cordon selon un mode particulier de réalisation de l'invention ;
- la figure 2 est une vue de côté du boîtier de la figure 1;
- la figure 3 est une vue en perspective éclatée du boîtier de la figure 1;
- la figure 4 représente une vue en coupe longitudinale du logement de cordon du boîtier de la figure 1 ;
- la figure 5 est une vue en perspective du boîtier de la figure 1 lorsque la jupe fermant le logement est retournée et le cordon est déroulé.
- La figure 6 est une vue de côté du boîtier de la figure 1 lorsque la jupe est retournée et le cordon est enroulé dans le logement.

Seuls les éléments nécessaires à la compréhension de l'invention ont été représentés. Pour faciliter la lecture des dessins, les mêmes éléments portent les mêmes références d'une figure à l'autre.

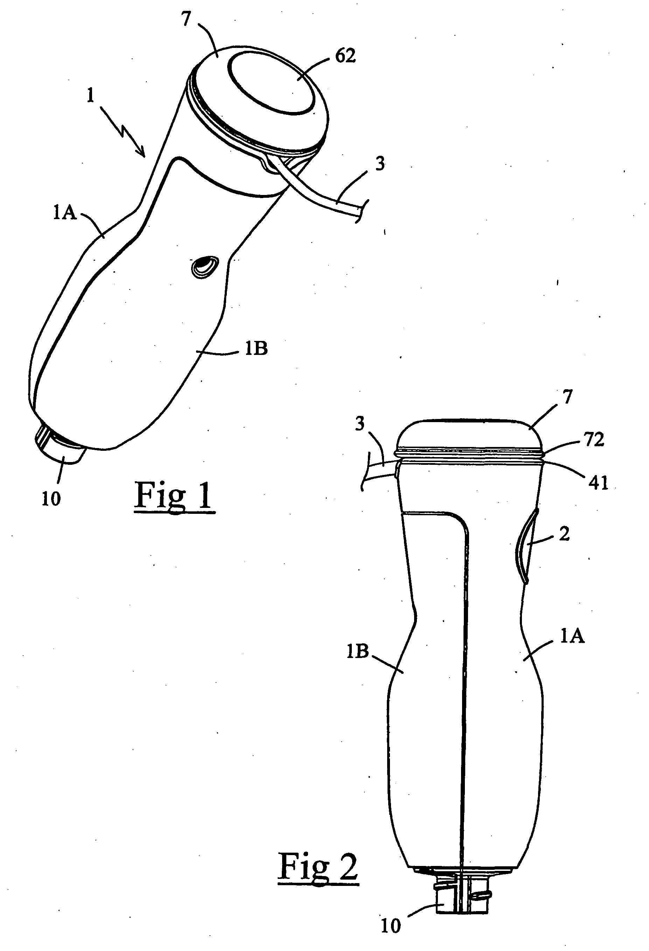

Les figures 1 et 2 représentent un boîtier d'appareil électroménager, prévu pour être tenu à la main, comportant un corps 1 de section circulaire comprenant une extrémité présentant un organe d'accouplement 10 permettant la connexion du boîtier à un accessoire non représenté sur les figures, tel un accessoire batteur ou un pied de mixage.

Conformément à ces figures, le corps 1 est constitué essentiellement par deux coquilles 1 A et 1B assemblées l'une sur l'autre par vissage, les coquilles 1 A,1 B étant avantageusement obtenues par moulage,d'une matière plastique.

Le corps du boîtier 1 comporte, à proximité de l'extrémité longitudinale munie de l'organe d'accouplement 10, un renflement qui renferme un moteur électrique, non représenté sur les figures, assurant l'entraînement de l'outil de travail de l'accessoire accouplé au boîtier. Le corps 1 du boîtier présente, au-dessus de ce renflement, une zone amincie comportant un bouton de commande 2 du moteur électrique, cette zone servant idéalement de zone de préhension de l'appareil.

Plus particulièrement selon l'invention, le boîtier comporte, à l'opposée de l'organe d'accouplement 10, un logement pour le rangement d'un cordon électrique 3 d'une longueur de l'ordre de 1,35 m, ce dernier permettant l'alimentation électrique du moteur par l'intermédiaire du bouton de commande 2.

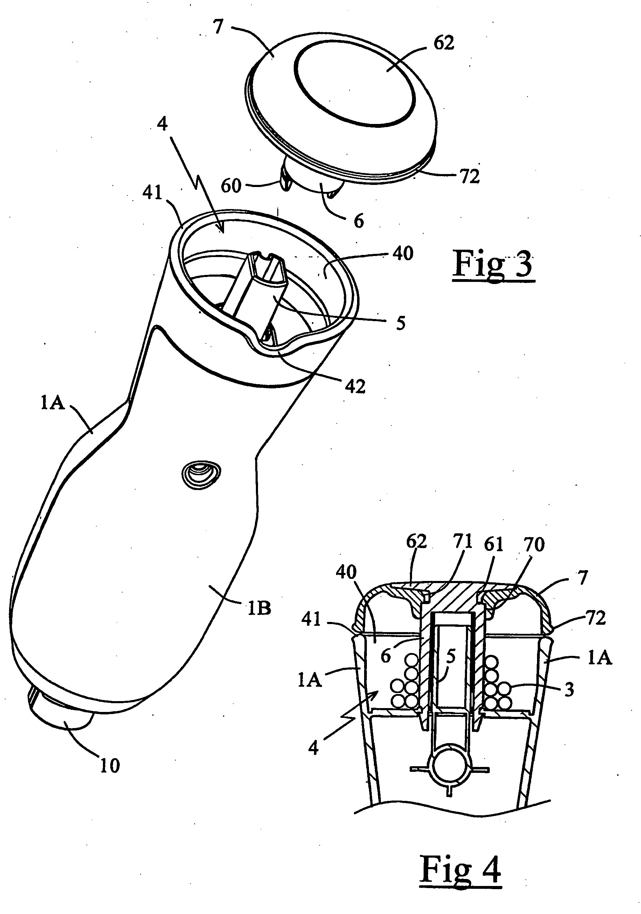

Conformément aux figures 3 et 4, le logement pour le cordon 3 est formé par une cavité 4, ouverte à l'extrémité du boîtier, et délimitée latéralement par une paroi 40 cylindrique présentant un bord supérieur 41 muni d'une encoche 42 pour le passage du cordon 3, la paroi 40 cylindrique étant préférentiellement portée par une seule 1A des deux coquilles 1A, 1B de manière à avoir une grand rigidité de la paroi 40.

Le fond de la cavité 4 comprend un moyeu central 5 en matériau plastique rigide, obtenu de moulage avec la coquille 1A, sur lequel vient s'emmancher un noyau 6 cylindrique comportant deux ergots élastiques 60 venant s'encliqueter dans des ouvertures disposées au fond de la cavité 4, de part et d'autre du moyeu central 5.

Le noyau 6 cylindrique présente une longueur supérieure à la profondeur de la cavité 4 de sorte que le noyau 6 comporte une extrémité s'élevant au-dessus du bord supérieur 41 de la paroi cylindrique 40, cette extrémité du noyau supportant une jupe souple 7 sensiblement hémisphérique comportant un bord inférieur venant dans le prolongement du corps 1 du boîtier et à proximité de ce dernier pour fermer le logement de rangement du cordon 3.

De manière préférentielle, la jupe souple 7 est obtenue par moulage d'un matériau élastomère ayant une bonne mémoire de forme, tel que du silicone ou un matériau thermoplastique élastomère tel que du SEBS (Styrène-éthylène butylène-styrène) ou autre.

Comme on peut mieux le voir sur la figure 4, la jupe souple 7 est emmanchée sur le noyau 6 cylindrique et présente une ouverture centrale 70 munie d'une nervure 71 qui s'engage dans une gorge 61 formée à l'extrémité supérieure du noyau 6 pour assurer l'immobilisation axiale de la jupe 7 sur le noyau 6, la jupe 7 pouvant rester libre en rotation sur le noyau 6.

De manière avantageuse, l'extrémité du noyau 6 comporte un disque 62 sur lequel la partie centrale de la jupe 7 vient s'appuyer pour augmenter la rigidité de la partie centrale de la jupe 7, la jupe 7 se prolongeant radialement par une zone courbe d'épaisseur amoindrie formant une zone de déformation préférentielle de la jupe 7 permettant notamment le retournement de la jupe.

La zone courbe de la jupe 7 se prolonge en direction du corps 1 du boîtier par une partie cylindrique de plus forte épaisseur présentant un bord inférieur venant à proximité du corps 1 du boîtier, ce bord comportant un bourrelet 72 facilitant l'insertion du cordon 3 entre la jupe 7 et le bord 41 supérieur de la cavité. Le bourrelet 72 présente également l'avantage de former une surépaisseur plus importante qui augmente la rigidité du bord de la jupe 7 ainsi que les forces de rappel élastique vers sa forme annulaire. Préférentiellement, un jeu de quelques dixième de millimètres à quelques millimètres est prévu entre le bourrelet 72 et le bord 41 de la cavité 4 pour faciliter l'insertion du cordon 3 dans la cavité 4 ainsi que la déformation de la jupe 7.

La jupe 7 ainsi obtenue présente l'avantage de posséder une bonne mémoire de forme au niveau du bourrelet 72, ce qui limite les risques de pincement de la jupe 7 vers l'intérieur du logement lors de l'enroulement manuel du cordon 3 autour du noyau 6 par l'utilisateur.

Ainsi, lorsque l'utilisateur souhaite utiliser l'appareil, il lui suffit de dérouler du noyau 6 la longueur du cordon 3 nécessaire, cette opération s'effectuant manuellement sans difficulté en faisant glisser le cordon 3 le long du bord 41 de la paroi latérale de la cavité, le bourrelet 72 de la jupe se déformant élastiquement au passage du cordon 3.

A l'inverse, lorsque l'utilisateur souhaite ranger le cordon 3 dans la cavité 4, il lui suffit d'enrouler le cordon 3 sur le noyau 6 en le faisant passer à la jonction entre le bourrelet 72 de la jupe 7 et le bord 41 de la cavité 4, le bourrelet 72 favorisant le repli de la jupe vers l'intérieur de la cavité et son retour en position initiale sans risque de pincement. Il est à noter que le cordon 3 peut indifféremment être enroulé dans un sens ou dans l'autre, ce qui permet de s'adapter à un geste naturel que la personne soit droitière ou gauchère. Lors de cette opération, l'aspect parfaitement lisse de la paroi 40 de cavité, réalisée en une seule pièce, présente l'avantage de ne pas accrocher le cordon 3, ce qui limite les risques de détérioration du cordon 3.

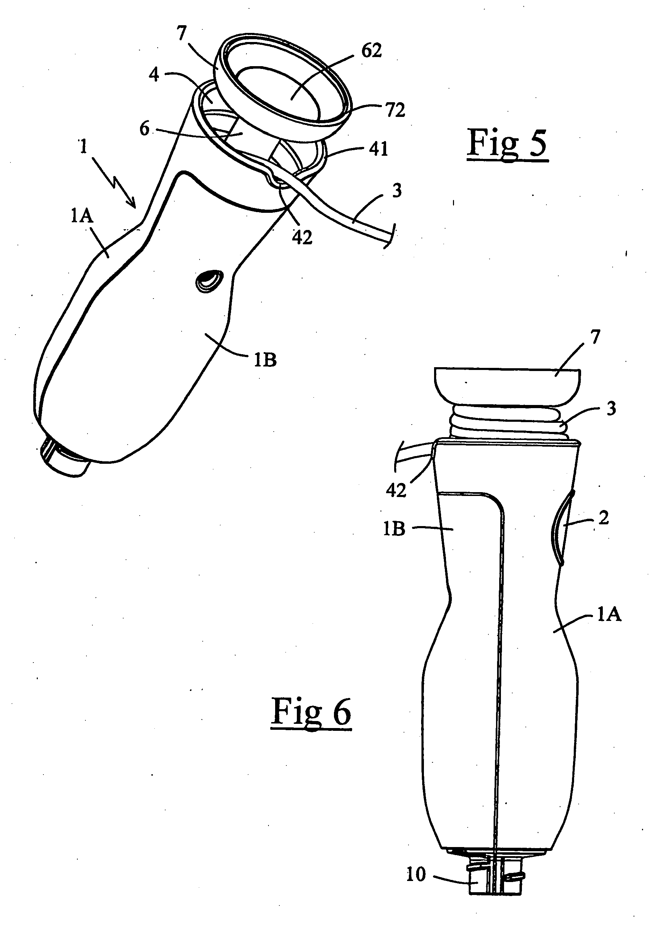

Comme on peut le voir sur les figures 5 et 6, la jupe 7 présente également l'avantage de pouvoir être retournée par l'utilisateur, en amenant manuellement le bourrelet 72 au dessus du disque 62, la jupe 7 présentant une forme sensiblement hémisphérique lui permettant de rester de manière stable dans cette position inversée.

Une tel retournement de la jupe 7 présente l'avantage de rendre plus accessible le noyau 6 d'enroulement et de supprimer les efforts de frottement de la jupe 7 sur le cordon 3 lorsque l'utilisateur souhaite enrouler ou dérouler le cordon 3 sur le noyau 6. Une fois l'enroulement du cordon 3 terminé, ce dernier est avantageusement placé au niveau de l'encoche 42 et la jupe 7 est ramenée dans sa position initiale pour masquer le cordon 3, l'encoche 42 assurant alors une immobilisation du cordon 3.

Enfin, le retournement de la jupe 7 présente l'avantage d'offrir un accès visuel sur le fond et la paroi cylindrique 40 de la cavité lorsque le cordon 3 est déroulé. Ainsi, la paroi ou le fond de la cavité 4 peut avantageusement comporter un marquage signalétique qui devient facilement accessible par simple retournement de la jupe 7, mais est masqué lorsque le cordon 3 est enroulé sur le noyau 6 ou lorsque la jupe 7 est ramenée à l'endroit. Un tel positionnement du marquage signalétique permet donc de conserver un corps de boîtier exempt de tout marquage apparent.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la jupe souple pourra être surmoulée sur le disque solidaire du noyau d'enroulement.

Ainsi, dans une variante de réalisation, la paroi délimitant latéralement la cavité pour le rangement du cordon pourra être formée par l'assemblage des deux coquilles du corps.

Ainsi, dans des variantes de réalisation non représentées, l'invention pourra être appliquée à d'autres types appareils électriques de préparation culinaire, tel un presse agrume ou un mini hachoir.

## Revendications

1. Boîtier d'appareil électroménager de préparation culinaire, tel un pied de mixage, ledit boîtier comportant un corps (1) renfermant un organe électrique alimenté par un cordon (3) électrique, le corps (1) du boîtier comportant un logement pour le rangement du cordon (3) comprenant un noyau (6) autour duquel le cordon (3) peut être enroulé, **caractérisé en ce que** ledit logement comprend une jupe (7) en matériau souple élastique, disposée dans le prolongement du corps (1) du boîtier et venant masquer au moins partiellement le noyau (6), ladite jupe (7) présentant une forme adaptée permettant son retournement dans une position stable libérant l'accès au logement.

2. Boîtier d'appareil électroménager selon la revendication 1, **caractérisé en ce que** la jupe (7) est portée par une extrémité du noyau (6) d'enroulement et présente une forme sensiblement hémisphérique.

3. Boîtier d'appareil électroménager de préparation culinaire selon l'une quelconque des revendications 1 à 2, **caractérisé en ce que** la jupe (7) comprend un bord venant à proximité du corps du boîtier qui présente une surépaisseur formant un bourrelet (72).

4. Boîtier d'appareil électroménager de préparation culinaire selon l'une quelconque des revendications 1 à 3, **caractérisé en ce que** le noyau (6) est réalisé dans un matériau plastique rigide, la jupe (7) étant rapportée sur ledit noyau (6).

5. Boîtier d'appareil électroménager de préparation culinaire selon l'une quelconque des revendications 1 à 4, **caractérisé en ce que** la jupe (7) souple est en silicone ou en matériau thermoplastique élastomère.

6. Boîtier d'appareil électroménager de préparation culinaire selon l'une quelconque des revendications 1 à 5, **caractérisé en ce que** le noyau (6) comporte une extrémité munie d'un disque (62) venant soutenir la jupe (7) dans sa partie centrale.

7. Boîtier d'appareil électroménager de préparation culinaire selon l'une quelconque des revendications 1 à 6, **caractérisé en ce que** le corps (1) du boîtier comporte une paroi (40) cylindrique venant à proximité de la jupe (7), la paroi (40) présentant une échancrure (42) pour le passage du cordon (3).

8. Boîtier d'appareil électroménager de préparation culinaire selon l'une quelconque des revendications 1 à 7, **caractérisé en ce que** ledit logement est formé partiellement par une cavité (4) disposée à l'extrémité du corps (1) du boîtier.

9. Boîtier d'appareil électroménager de préparation culinaire selon la revendication 8, **caractérisé en ce que** le corps (1) du boîtier est formé par deux coquilles (1A, 1B) assemblées l'une sur l'autre et **en ce que** la cavité (4) du logement de cordon est délimitée latéralement par une paroi (40) portée par une seule (1A) des deux coquilles (1A, 1B) du corps.

10. Boîtier d'appareil électroménager de préparation culinaire selon l'une quelconque des revendications 8 à 9, **caractérisé en ce que** la cavité (4) comporte une zone de marquage qui est masquée par la jupe (7) souple et qui peut être rendue visible en retournant la jupe (7).

## Claims

1. A housing for a household food preparation appliance, such as a blender attachment, said housing comprising a body (1) containing an electrical element powered by an electrical cord (3), the body (1) of the housing comprising a recess for the storage of the cord (3) comprising a core (6) around which the cord (3) can be wound, **characterised in that** said recess comprises a skirt (7) made of a flexible elastic material, arranged in the extension of the body (1) of the housing and which at least partially masks the core (6), said skirt (7)' having an adapted shape such that it can be turned around to a stable position freeing access to the recess.

2. A housing for a household appliance according to claim 1, **characterised in that** the skirt (7) is carried by one end of the winding core (6) and has a substantially hemispherical shape.

3. A housing for a household food preparation appliance according to any one of claims 1 to 2, **characterised in that** the skirt (7) comprises an edge close to the body of the housing, and which has an overthickness forming a bead (72).

4. A housing for a household food preparation appliance according to any one of claims 1 to 3, **characterised in that** the core (6) is made of a rigid plastic material, the skirt (7) being fitted on said core (6).

5. A housing for a household food preparation appliance according to any one of claims 1 to 4, **characterised in that** the flexible skirt (7) is made of silicone or thermoplastic elastomer.

6. A housing for a household food preparation appliance according to any one of claims 1 to 5, **characterised in that** the core (6) contains one end fitted with a disc (62) which supports the skirt (7) in the central section thereof.

7. A housing for a household food preparation appliance according to any one of claims 1 to 6, **characterised in that** the body (1) of the housing contains a cylindrical wall (40) close to the skirt (7), the wall (40) having an opening (42) for the passage of the cord (3).

8. A housing for a household food preparation appliance according to any one of claims 1 to 7, **characterised in that** said recess is partially formed by a cavity (4) arranged at the end of the body (1) of the housing.

9. A housing for a household food preparation appliance according to claim 8, **characterised in that** the body (1) of the housing is formed by two shells (1A, 1 B) assembled one on the other and **in that** the cavity (4) of the cord recess is delimited laterally by a wall (40) carried by only one (1 A) of the two shells (1 A, 1 B) of the body.

10. A housing for a household food preparation appliance according to any one of claims 8 to 9, **characterised in that** the cavity (4) contains a marking zone which is masked by the flexible skirt (7) and which can be made visible by turning around the skirt (7).

## Patentansprüche

1. Gehäuse eines Elektrohaushaltsgerätes für kulinarische Zubereitungen, wie etwa ein Mixstab, wobei das Gehäuse einen Körper (1) umfasst, der ein elektrisches Organ einschließt, das von einem Stromkabel (3) gespeist wird, wobei der Körper (1) des Gehäuses eine Aufnahme für die Aufbewahrung des Kabels (3) umfasst, die einen Kern (6) aufweist, um den herum das Kabel (3) aufgewickelt werden kann, **dadurch gekennzeichnet, dass** die Aufnahme eine Abdeckung (7) aus weichem, elastischem Material umfasst, die in Verlängerung des Körpers (1) des Gehäuses angeordnet ist und wenigstens teilweise den Kern (6) abdeckt, wobei die Abdeckung (7) eine entsprechende Form aufweist, die ihre Umkehrung in eine stabile Position mit freiem Zugang zur Aufnahme ermöglicht.

2. Gehäuse eines Elektrohaushaltsgerätes nach Anspruch 1, **dadurch gekennzeichnet, dass** die Abdeckung (7) von einem Ende des Kerns (6) zum Aufwickeln getragen wird und eine im Wesentlichen halbkugelförmige Form aufweist.

3. Gehäuse eines Elektrohaushaltsgerätes für kulinarische Zubereitungen nach einem der Ansprüche 1 bis 2, **dadurch gekennzeichnet, dass** die Abdeckung (7) einen Rand umfasst, der zum Körper des Gehäuses angrenzt und eine Verdickung aufweist, die einen Wulst (72) bildet.

4. Gehäuses eines Elektrohaushaltsgerätes für kulinarische Zubereitungen nach einem der Ansprüche 1 bis 3, **dadurch gekennzeichnet, dass** der Kern (6) aus einem starren Kunststoffmaterial hergestellt ist, wobei die Abdeckung (7) auf den Kern (6) aufgesetzt ist.

5. Gehäuse eines Elektrohaushaltsgerätes für kulinarische Zubereitungen nach einem der Ansprüche 1 bis 4, **dadurch gekennzeichnet, dass** die weiche Abdeckung (7) aus Silikon oder einem thermoplastischen Elastomermaterial ist.

6. Gehäuse eines Elektrohaushaltsgerätes für kulinarische Zubereitungen nach einem der Ansprüche 1 bis 5, **dadurch gekennzeichnet, dass** der Kern (6) ein Ende aufweist, das mit einer Scheibe (62) versehen ist, die die Abdeckung (7) in ihrem Mittelteil stützt.

7. Gehäuse eines Elektrohaushaltsgerätes für kulinarische Zubereitungen nach einem der Ansprüche 1 bis 6, **dadurch gekennzeichnet, dass** der Körper (1) des Gehäuses einen zylindrische Wand (40) umfasst, die zur Abdeckung (7) angrenzt, wobei die Wand (40) eine Einbuchtung (42) für den Durchgang des Kabels (3) aufweist.

8. Gehäuse eines Elektrohaushaltsgerätes für kulinarische Zubereitungen nach einem der Ansprüche 1 bis 7, **dadurch gekennzeichnet, dass** die Aufnahme teilweise von einem Hohlraum (4) gebildet wird, der am Ende des Körpers (1) des Gehäuses angeordnet ist.

9. Gehäuse eines Elektrohaushaltsgerätes für kulinarische Zubereitungen nach Anspruch 8, **dadurch gekennzeichnet, dass** der Körper (1) des Gehäuses von zwei Schalen (1A, 1 B) gebildet wird, die zusammengefügt sind, und dadurch, dass der Hohlraum (4) der Aufnahme des Kabels seitlich von einer Wand (40) begrenzt ist, die von nur einer (1A) der zwei Schalen (1A, 1 B) des Körpers getragen wird.

10. Gehäuse eines Elektrohaushaltsgerätes für kulinarische Zubereitungen nach einem der Ansprüche 8 bis 9, **dadurch gekennzeichnet, dass** der Hohlraum (4) einen Markierungsbereich aufweist, der von der weichen Abdeckung (7) abgedeckt wird und der durch Umkehren der Abdeckung (7) sichtbar gemacht werden kann.
